# EUROPÄISCHE PATENTSCHRIFT

(11) **EP 2 280 185 B1**
(45) Veröffentlichungstag und Bekanntmachung des Hinweises auf die Patenterteilung: **20.04.2016**
(21) Anmeldenummer: 10006854.3
(22) Anmeldetag: 02.07.2010
(51) Int. Cl.: F16D 41/08

(54) **Schaltbarer Freilauf**
Switchable freewheel assembly
Roue libre commutable

(30) Priorität: 27.07.2009 DE 102009034889
(43) Veröffentlichungstag der Anmeldung: 02.02.2011
(73) Patentinhaber: Rheinmetall Landsysteme GmbH, 29345 Unterlüß (DE)
(72) Erfinder: Policzka, Florian, 86179 Augsburg (DE)
(74) Vertreter: Dietrich, Barbara

(56) Entgegenhaltungen:
- EP-A1- 0 015 674
- DE-A1- 10 158 608
- DE-A1-102004 035 634
- DE-B- 1 216 623
- DE-C- 857 162
- FR-A- 704 711
- FR-A1- 2 289 796
- GB-A- 435 148
- JP-A- S5 551 129
- US-A- 2 041 445

## Beschreibung

Die Erfindung beschäftigt sich mit einem entkoppelten und somit schaltbaren Freilauf unter anderem zur Anwendung bei einem Munitionsmagazin zur Zuführung einer Munition an eine Waffe.

Freiläufe werden in der Antriebstechnik verwendet um Drehmomentübertragungen wischen Antriebsseite und Abtriebsseite in nur eine Drehrichtung zu gewährleisten (Sperrrichtung). In der entgegengesetzten Drehrichtung werden hingegen keine Drehmomente übertragen (Freilaufrichtung). In der Sperrrichtung drehen sich die Welle und Nabe synchron, während in der Freilaufrichtung eine Relativbewegung möglich ist.

Bei einigen Applikationen ist das Schalten eines Freilaufes jedoch nötig, sodass eine Relativbewegung zwischen Welle und Nabe auch gegen die Sperrrichtung der Freilauf drehbar ist. Verwendet werden hierbei so genannte Klinkenfreiläufe, die durch Abheben der Klinken von der Verzahnung geschaltet werden. Alternativ wird der Freilauf mit einer zusätzlichen Kupplung, beispielsweise Klauenkupplung, Reibkupplung, Keilwellenverbindung etc. kombiniert.

Wird der Freilauf so betrieben, dass eine Relativbewegung zwischen Welle und Nabe nur in eine Richtung möglich ist, spricht man vom Regelbetrieb. Ist die Relativbewegung in beide Richtungen möglich, nennt man diese Freischaltbetrieb.

Ein Sortiment an Freilaufkupplungen wird auf der Internetseite der Firma Renold angeboten - http://www.renold.de/renoldgermany/Web/Site/EN/Products/SpragClutchFreewheels/Sprag Clutch Index.asp (beispielsweise).

Die DE 101 58 608 A1 betrifft einen kraftschlüssigen Wellenschalter mit selbstverstärkender Wirkung zur wahlweisen Verbindung und Trennung von zwei Wellen bzw. zur Verbindung und Trennung von Wellen und auf ihnen angeordneten Bauteilen zum Zweck der Übertragung von Drehbewegung und Drehmomenten in beide Richtungen. Der kegelig gestaltete Wellenschalter besteht dabei aus einem Innenring und einem Außenring und zwischen den Ringen angeordneten Klemmkörpern, die in beiden Dreh- bzw. Momentenrichtungen zum Klemmen kommen. Durch axiales Verschieben eines Ringes oder des Klemmkörpersatzes kann der Wellenschalter ein- und ausgeschaltet werden. Die Klemmkörper können unrund ausgebildet und mit einem runden kegeligen Ring und einem polygonartigen unrunden kegeligen Ring kombiniert sein.

Die FR 704 711 A offenbart einen Mechanismus zur Geschwindigkeitsänderung in einem Kraftfahrzeug, der zwischen einer Hauptachse und einer Sekundärachse eingebunden ist.

Aus der EP 0 015 674 A1 ist ein Einweg-Kuppelungsmechanismus bekannt.

Klinkenfreiläufe sind keine herkömmlichen Kaufteile. Der Aufwand, die Klinken von der Welle abzuheben, ist erheblich, wenn die Bedienungsstelle vom Freilauf weiter entfernt ist. Eine notwendige separate Kupplung benötigt zusätzlichen Bauraum. Klauenkupplungen sowie Keilwellenverbindungen sind zudem nicht in jeder Position schaltbar, sodass eine Synchronisation zwischen Welle und Nabe benötigt wird.
Antriebe mit Freiläufen werden unter anderem bei der Zuführung verschiedener Munitionstypen an eine Waffe verwendet.

Aus der DE 10 2004 035 634 A1 ist ein Munitionsmagazin bekannt, dass aus einem oder mehreren Munitionskanälen besteht. Die Munitionskanäle weisen einen rechteckigen oder u-förmigen Querschnitt auf und sind gemeinsam in beliebiger Form spiralförmig, oval oder rechteckig um einen Mittelpunkt im Magazin gewickelt. Die Zufuhr der Munition je Kanal zur Waffe erfolgt durch ein Förderelement. Die Munitionskanäle dienen dabei zur Aufnahme und Führung mittels Gurte gehaltener Munitionen verschiedener Sorten. Beide sind über Gurtglieder miteinander verbunden, sodass hier eine rechtsdrehende und eine linksdrehende Funktion der Förderelemente vorzusehen ist. Ein derartiges Magazin beschreibt auch die DE 10 2004 019 502 A1. Das macht in der Praxis ein Entkoppeln eines der Förderelemente notwendig, damit dieser den Transport der Munition nicht behindert.

Die Erfindung stellt sich daher die Aufgabe, eine einfache Variante für einen Freischaltbetrieb in der Antriebstechnik aufzuzeigen, die zudem vorzugsweise in jeder beliebigen Stellung der Welle zur Nabe den Freilauf vom Freischaltbetrieb in den Regelbetrieb und umgekehrt umschalten kann.

Gelöst wird die Aufgabe durch die Merkmale des Patentanspruchs 1. Vorteilhafte Ausgestaltungen sind in den Unteransprüchen enthalten.

Der Erfindung liegt die Idee zugrunde, das Funktionsprinzip des Freilaufs gezielt auszunutzen, um einen Freischaltbetrieb zu ermöglichen. Dabei werden vorzugsweise zwei Bereiche auf der Welle oder Nabe definiert, die entweder den Freischalt- oder den Regelbetrieb realisieren. Der Abstand zwischen Welleninnenseite und Nabeninnenseite entspricht bei dem Bereich für den Regelbetrieb den Angaben des Herstellers. Bei dem Bereich für den Freischaltbetrieb wird der Abstand so groß gewählt, dass die Klemmelemente sich zwar zwischen Welle und Nabe spreizen können, die Welle aber nicht mehr klemmen. Das Umschalten zwischen Regel- und Freischaltbetrieb wird durch eine axiale Verschiebung zwischen Welle und Nabe erreicht.

Zur Umsetzung dieser Idee werden vorzugsweise Freiläufe verwendet, die die Drehmomentübertragung über Reibung sicherstellen. Mittel, beispielsweise Klemmelemente, spreizen sich beim Betrieb zwischen Nabeninnenseite und Wellenaußenseite. Für einen sicheren Betrieb ist ein definiertes, von den Klemmenelementen abhängiges Verhältnis von Nabeninnendurchmesser zu Wellenaußendurchmesser zu beachten. Diese Tatsache wird bewusst ausgenutzt. So wird in einem definierten Bereich der Welle entweder der Wellendurchmesser zu klein oder der Nabendurchmesser zu groß bemessen, sodass die Klemmelemente sich zwar zwischen Welleninnenseite und Nabenaußenseite spreizen, jedoch keine Verbindung zwischen beiden herstellen.

Die Arbeitsweise des entkoppelbaren / schaltbaren Freilaufs ermöglicht die Reduktion der Baugröße sowie der Bauteile durch Wegfall zusätzlicher Komponenten. Zudem ist die Handhabung zum Umschalten der Betriebsarten einfacher und in jeder Stellung machbar.

Anhand eines Ausführungsbeispiels mit Zeichnung soll die Erfindung näher erläutert werden. Es zeigt:
- Fig. 1: eine schematische Darstellung der Stellung einer Welle im Regelbetrieb, nich Teil der Erfindung.
- Fig. 2: eine schematische Darstellung der Stellung einer Welle im Freischaltbetrieb, nich Teil der Erfindung.
- Fig. 3: eine schematische Darstellung der Stellung Nabe für den Regelbetrieb,
- Fig. 4: eine schematische Darstellung der Stellung Nabe im Freischaltbetrieb,
- Fig. 5: den Freilauf eines Antriebes in Eingriff,
- Fig. 6: den Freilauf außer Eingriff.

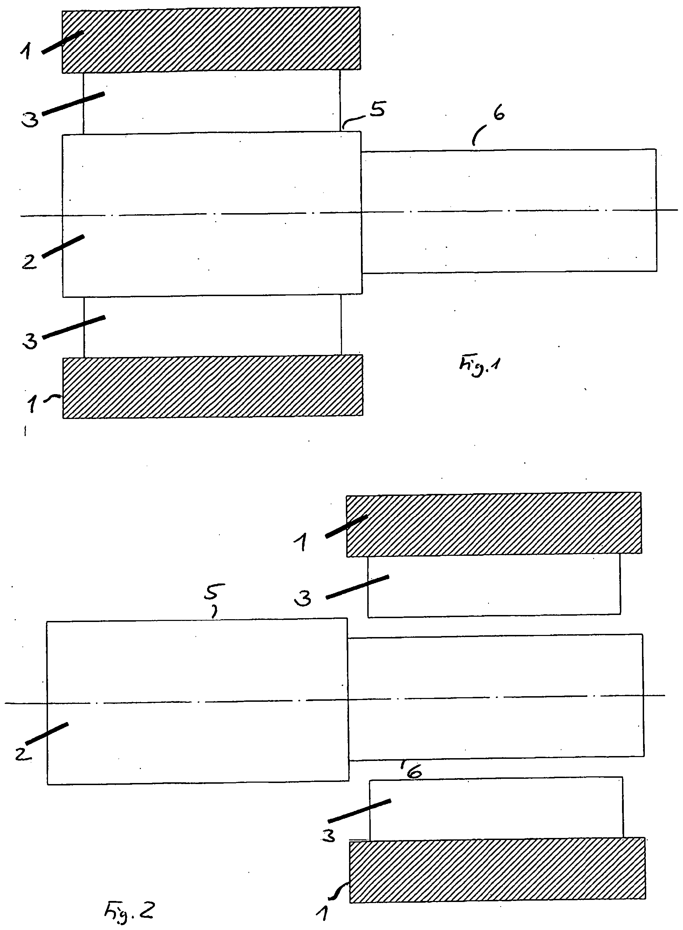

In den Figuren sind mit 1 bzw. 1' eine Nabe, mit 2 bzw. 2' eine Welle und mit 3 Mittel zum Angreifen an die Welle 2, 2', beispielsweise Klemmelemente, eines Antriebes 4 mit Freilauf bezeichnet. Die Mittel 3 sind in den Fig. 1 und 2 über eine mechanische Verbindung mit der Nabeninnenfläche der Nabe 1 verbunden. Die Welle 2 zeichnet sich in bekannterweise in diesen beiden Fig. dadurch aus, dass sie einen dickeren Bereich 5 sowie einen verjüngten dünneren Bereich 6 besitzt. Im dicken Bereich 5 wird über die Mittel 3 eine mechanische (Klemm-)Verbindung zwischen Welle 2 und Nabe 1 realisiert (Fig. 1). Der Antrieb 4 befindet sich im so genannten Regelbetrieb. Für den Freischaltbetrieb wird die Welle 2 (und / oder Nabe 1) axial derart verschoben, dass nunmehr der verjüngte Bereich 6 zwischen den Mitteln 3 zum Liegen kommt (Fig. 2).

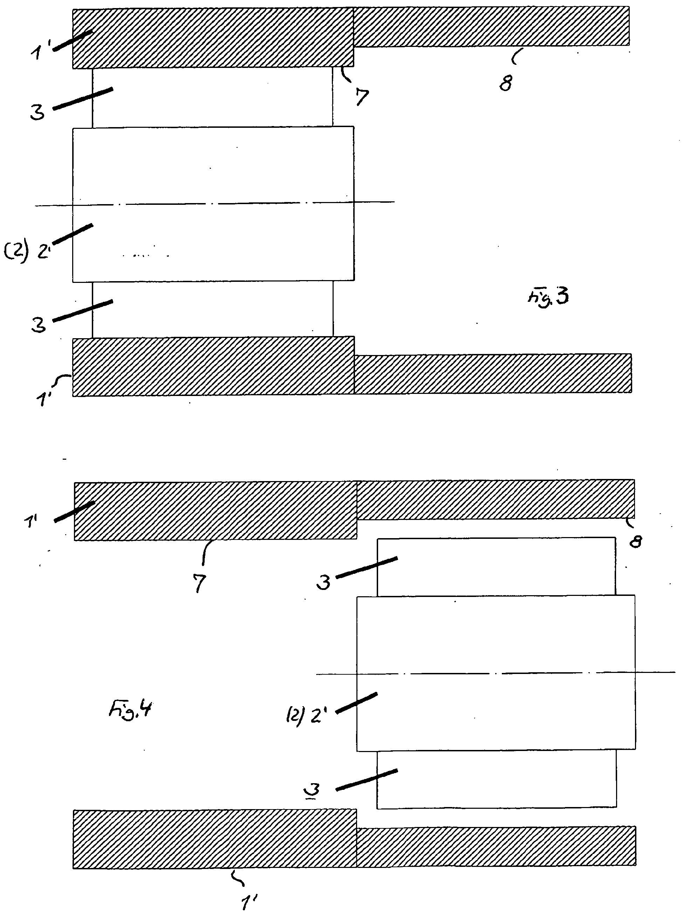

Die Idee des Freischaltbetriebes lässt sich erfindungsgemäß durch eine Aufweitung der Nabe 1' umsetzen. Hierbei sind die Mittel 3 mechanisch mit der Welle 2' verbunden. Die Welle 2' kann in dieser Ausführung einen konstanten Durchmesser aufweisen. Die Nabe 1' hingegen besitzt einen normalen Bereich 7 und einen weiteren Abschnitt 8. Dieser Bereich 8 besitzt einen größeren Innendurchmesser als der normale Bereich 7. Fig. 3 zeigt den Regelbetrieb und Fig. 4 den Freischaltbetrieb auf. Im Regelbetrieb des Antriebes 4 realisieren die Mittel 3 eine mechanische Verbindung zwischen der Welle 2' und der Nabe 1'. Im Freischaltbetrieb nach Fig. 4 wird die Nabe 1' und / oder Welle 2' derart verschoben, dass die Mittel 3 den Kontakt zur Nabe 1' verlieren.

Für das Umschalten von Freischaltbetrieb in den Regelbetrieb wird nach der ersten Ausführung die Welle 2 / Nabe 1 wieder soweit verschoben, dass beide wieder zueinander in den Eingriff kommen. Nach der zweiten Ausführung werden die Nabe 1' / Welle 2' soweit verschoben bis beide wieder Wirkfunktional verbunden sind.

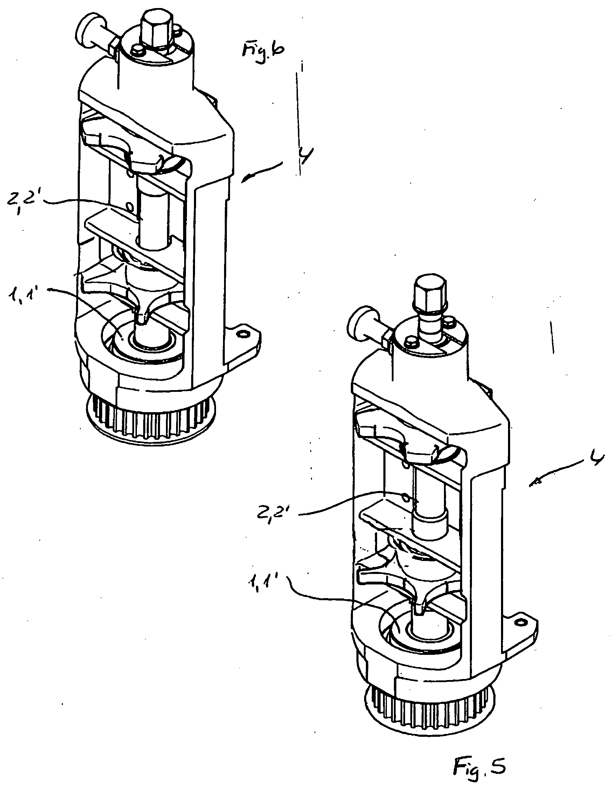

Fig. 5 zeigt den Antrieb 4 mit dem im Eingriff befindlichen Freilauf während Fig. 6 den außer Eingriff liegenden Freilauf darstellt.

## Patentansprüche

1. Antrieb (4) mit Freilauf, aufweisend zumindest eine Nabe (1'), eine Welle (2'), sowie an die Welle (2') angreifende Mittel (3), wobei die Nabe (1') einen normalen Bereich (7) und einen aufgeweiteten weiteren Abschnitt (8) mit einem größeren Innendurchmesser als der normale Bereich (7) besitzt, der Antrieb (4) sich im so genannten Regelbetrieb befindet, wenn die Nabe (1') mit ihrem normalen Bereich (7) mit der Welle (2') in Berührung kommt, und für den Freischaltbetrieb die Nabe (1') und / oder Welle (2') derart verschoben wird, dass die Aufweitung gegenüber der Welle (2, 2') zum Liegen kommt, wobei die Welle (2') einen gleichbleibenden Durchmesser aufweist.

2. Antrieb nach Anspruch 1, **dadurch gekennzeichnet, dass** die Mittel (3) und die Welle (2') mechanisch miteinander verbunden sind.

3. Antrieb nach Anspruch 1 oder 2, **dadurch gekennzeichnet, dass** die Nabe (1') und die Mittel (3) im normalen Bereich (7) mechanisch miteinander verbunden sind.

4. Antrieb nach einem der Ansprüche 1 bis 3, **dadurch gekennzeichnet, dass** die Mittel (3) Klemmelemente sind.

5. Munitionsmagazin mit einem Antrieb nach einem der Ansprüche 1 bis 4.

## Claims

1. Drive (4) with a freewheel, having at least one hub (1'), a shaft (2'), and means (3) which act on the shaft (2'), the hub (1') having a normal region (7) and a widened further section (8) with a greater internal diameter than the normal region (7), the drive (4) being in what is known as regular operation if the hub (1') comes into contact by way of its normal region (7) with the shaft (2'), and the hub (1') and/or shaft (2') being displaced for unlocked operation in such a way that the widened portion comes to lie opposite the shaft (2, 2'), the shaft (2') having a constant diameter.

2. Drive according to Claim 1, **characterized in that** the means (3) and the shaft (2') are connected mechanically to one another.

3. Drive according to Claim 1 or 2, **characterized in that** the hub (1') and the means (3) are connected mechanically to one another in the normal region (7).

4. Drive according to one of Claims 1 to 3, **characterized in that** the means (3) are clamping elements.

5. Ammunition magazine having a drive according to one of Claims 1 to 4.

## Revendications

1. Entraînement (4) avec roue libre, présentant au moins un moyeu (1'), un arbre (2'), ainsi que des moyens (3) venant en prise avec l'arbre (2'), le moyeu (1') possédant une région normale (7) et une portion supplémentaire élargie (8) de plus grand diamètre intérieur que la région normale (7), l'entraînement (4) se trouvant en mode dit de régulation lorsque le moyeu (1') vient en contact avec l'arbre (2') avec sa région normale (7) et, pour le mode de fonctionnement de commutation libre, le moyeu (1') et/ou l'arbre (2') étant déplacés de telle sorte que l'élargissement vienne se placer en regard de l'arbre (2, 2'), l'arbre (2') présentant un diamètre uniforme.

2. Entraînement selon la revendication 1, **caractérisé en ce que** les moyens (3) et l'arbre (2') sont connectés mécaniquement les uns aux autres.

3. Entraînement selon la revendication 1 ou 2, **caractérisé en ce que** le moyeu (1') et les moyens (3) sont connectés mécaniquement les uns aux autres dans la région normale (7).

4. Entraînement selon l'une quelconque des revendications 1 à 3, **caractérisé en ce que** les moyens (3) sont des éléments de serrage.

5. Magasin de munitions comprenant un entraînement selon l'une quelconque des revendications 1 à 4.
